# EUROPÄISCHE PATENTSCHRIFT

(11) **EP 0 645 834 B1**
(45) Veröffentlichungstag und Bekanntmachung des Hinweises auf die Patenterteilung: **26.03.1997**
(21) Anmeldenummer: 94108212.5
(22) Anmeldetag: 28.05.1994
(51) Int. Cl.: H01M 4/50, H01M 4/26

(54) **Verfahren zur Herstellung einer positiven Elektrode für Lithium-Sekundärbatterien**
Process for preparing a positive electrode for secondary lithium batteries
Procédé de fabrication d'une électrode positive pour batteries secondaires ou lithium

(30) Priorität: 18.08.1993 DE 4327760
(43) Veröffentlichungstag der Anmeldung: 29.03.1995
(73) Patentinhaber: VARTA Batterie Aktiengesellschaft, 30419 Hannover (DE)
(72) Erfinder: Sterr, Gerhard, Dr., D-65779 Kelkheim (DE)
(74) Vertreter: Kaiser, Dieter Ralf, Dipl.-Ing.

(56) Entgegenhaltungen:
- WO-A-92/18425
- GB-A- 2 276 155
- GB-A- 2 276 156
- PATENT ABSTRACTS OF JAPAN vol. 16, no. 472 (E-1272) 30. September 1992 & JP-A-04 169 065 (MITSUBISHI ELECTRIC CORP.)
- PATENT ABSTRACTS OF JAPAN vol. 15, no. 258 (E-1084) 28. Juni 1991 & JP-A-03 084 874 (HITACHI MAXELL LTD.)
- PATENT ABSTRACTS OF JAPAN vol. 16, no. 472 (E-1272) 30. September 1992 & JP-A-04 169 065
- PATENT ABSTRACTS OF JAPAN vol. 15, no. 258 (E-1084) 28. Juni 1991 & JP-A-03 084 874

## Beschreibung

Die Erfindung betrifft ein Verfahren zur Herstellung einer positiven Elektrode für Lithium-Sekundärbatterien, deren aktives Material aus einem Lithium-Manganoxid mit Spinellstruktur besteht, welches durch Mischen von Mangandioxid mit Lithiumformiat und/oder Lithiumazetat und anschließendes Erhitzen der Mischung gebildet ist.

Lithium-Manganspinelle werden heute mit großem Vorteil als positives Elektrodenmaterial in elektrochemischen Zellen vom Typ Li/LiₓMn₂O₄ eingesetzt. Der Lade/Entlademechanismus solcher Elemente beruht auf dem Vermögen des Manganoxids, aktive Li⁺-Ionen in seinem Spinellgitter, das eine offene Skelettstruktur bildet, reversibel zu intercalieren und zu deintercalieren. Parallel mit fortschreitender Ladung bzw. Entladung ändert sich daher auch x.

Zur präparativen Darstellung eines LiMn₂O₄-Materials aus MnO₂ geht man gewöhnlich von einem handelsüblichen Mangandioxid aus, das mit einer festen Lithiumverbindung, z.B. Lithiumhydroxid, Lithiumcarbonat oder Lithiumjodid, in einem Mörser gründlich vermahlen und anschließend zum Zwecke des Sinterns erhitzt wird.

Der Sinterkuchen kann gegebenenfalls zerkleinert und mit einem Leitmittel (Graphit) und einem Bindemittel versehen werden, bevor er zum fertigen Kathodenpellet verpreßt wird.

Die handelsüblichen Manganoxide (Braunsteine) bilden insofern ein günstiges Ausgangsmaterial für die Präparation der Lithium-Manganspinelle, als sie bereits seit langem in der Batterieindustrie eingesetzt werden, ihr elektrochemisches Verhalten gründlich erforscht ist, sie einen preisgünstigen Rohstoff darstellen und mit Blick auf die Umweltverträglichkeit keine Probleme bereiten.

Die auf die beschriebene Weise hergestellten Kathodensubstanzen sind allerdings bisher mit dem Mangel einer unzureichenden Zyklenstabilität behaftet geblieben. Die entladbaren Kapazitäten fallen im Laufe der Zyklenlebensdauer zusehends ab, insbesondere nach einer vorangegangen Hochtemperaturlagerung.

Es hat daher nicht an Vorschlägen gefehlt, die Wirtsstruktur des Manganspinells zu stabilisieren, beispielsweise dadurch, daß ein Teil des Mangans im Gitter durch Fremdmetalle, darunter Co, Ni, Fe, substituiert wird. Durchgreifende Erfolge sind jedoch ausgeblieben.

Aus der JP-OS 4-169065 ist es auch bekannt, ein positives Elektrodenmaterial für Lithiumbatterien aus MnO₂ und Lithiumsalzen der Ameisensäure und der Essigsäure, mit denen das Manganoxid anstelle von LiOH · H₂O oder Li₂CO₃ gemischt wird, herzustellen. Eine Temperung des Gemisches erfolgt bei relativ niedrigen Temperaturen zwischen 200°C und 500°C.

Der Erfindung liegt die Aufgabe zugrunde, ein Verfahren zur Herstellung eines Lithium-Manganspinells vom Typ LiₓMn₂O₄ anzugeben, der sich als Kathodenmaterial in Lithiumzellen mit organischem Elektrolyten als zyklenstabil erweist und sich insbesondere auch bei Systemen, bei denen Lithium in beiden Elektroden intercaliert wird (sogenannte "SWING"-Systeme), als Gegenelektrode zu einer negativen Lithiumelektrode vom Intercalationstyp (Li in einer Kohlematrix) eignet.

Die Aufgabe wird erfindungsgemäß durch ein Verfahren gelöst, wie es in Patentanspruch 1 definiert ist.

Danach wird als erster Schritt ein inniges Gemisch aus reinem Manganoxid und ameisensaurem Lithium, HCOOLi, oder essigsaurem Lithium, CH₃COOLi, gegebenenfalls auch beiden Salzen, bereitet, wobei man eine besonders innige Vermischung dadurch erzielt, daß man eine Suspension des Braunsteins in einer wässerigen Lösung der entsprechenden Lithiumsalze herstellt und diese dann einer Sprühtrocknung unterwirft.

Ein vorzugsweise einsetzbares Mangandioxid ist durch chemische Umsetzungen, meist durch Fällung aus Mangansalzlösungen, gewonnen und als "chemisches" Mangandioxid (CMD) ein marktgängiges Produkt. Ebenso ist aber auch reines β-MnO₂, das in der Natur als Pyrolusit vorkommt, als Ausgangsmaterial geeignet.

Die genannten Bestandteile werden in solchen Mengenanteilen gemischt, daß sich ein Molverhältnis Mn : Li = 2 : x mit 0,5 < x < 1,5, vorzugsweise 0,9 < x < 1,2, ergibt.

Das erhaltene Gemisch -im letzteren Fall der erhaltene Trockenrückstand- wird in einem zweiten Schritt zwischen 10 und 100 Stunden an Luft auf 600°C bis 750°C, erhitzt. Aus dieser thermischen Behandlung geht, bedingt durch die mit der Umsetzung der Mischungskomponenten einhergehende starke Gasentwicklung, ein äußerst feinkristalliner Lithium-Manganspinell hervor. Die kleine Partikelgröße dieses Präparats korrespondiert mit einer relativ großen BET-Oberfläche (> 5m²/g). Diese verleiht dem erfindungsgemäß hergestellten Manganspinell wiederum gute Hochstromeigenschaften.

Das Produkt wird anschließend vermahlen und zur Elektrode verarbeitet.

Das so hergestellte aktive Elektrodenmaterial genügt der Forderung nach guter Zyklenfestigkeit in Batterien mit positiven LiₓMn₂O₄-Elektroden und negativen Li- oder Li-intercalierenden Elektroden. Es zeichnet sich ferner durch Hochtemperaturfestigkeit aus und eignet sich daher auch für den Einsatz in galvanischen Festelektrolyt-Zellen, die in Temperaturbereichen oberhalb RT betrieben werden.

Schließlich erweist sich speziell mit Blick auf die Herstellung von Zellen mit positiven und negativen, Lithium intercalierenden Elektroden (Swing-System) die Dotierbarkeit des vorliegenden Lithium-Manganspinells mit Lithium bis weit über die stöchiometrische Zusammensetzung hinaus (maximal x = 1,5) als außerordentlich vorteilhaft.

Die Elektroden solcher Zellen im fertig montierten und verschlossenen Zustand sind gewöhnlich ungeladen, d.h. alles verfügbare Lithium ist in der positiven Spinell-oder Metalloxid-Elektrode eingelagert, während die Wirtsstruktur der negativen Elektrode von Lithium entleert ist.

Bei der ersten Ladung findet Auslagerung des Lithiums aus dem positiven Wirtsgitter und Einlagerung in das negative Wirtsgitter, vorzugsweise eine Kohlematrix, statt. Von der Kohlematrix wird nun ein Teil des Lithiums unter Bildung einer Deckschicht, d.h. durch eine irreversible chemische Reaktion, festgehalten und dem Intercalationsmechanismus auf diese Weise eine gewisse Lithiummenge durch das chemisch nicht indifferente Kohlematerial von Anfang an entzogen.

Durch einen erfindungsgemäß mit einer überstöchiometrischen Lithiummenge angesetzten Lithium-Manganspinell ist es jedoch möglich, die Reaktivität der Kohleelektrode abzusättigen, so daß die Inercalation und Deintercalation des Lithiums in der Kohlematrix quasi verlustlos, also reversibel ablaufen kann.

## Patentansprüche

1. Verfahren zur Herstellung einer positiven Elektrode für Lithium-Sekundärbatterien, deren aktives Material aus einem Lithium-Manganoxid mit Spinellstruktur besteht, welches durch Sprühtrocknen einer Suspension des Mangandioxids in einer wäßrigen Lösung von Lithiumformiat und/oder Lithiumazetat und anschließendes Erhitzen der Mischung gebildet ist, wobei die Mischung zwischen 10 und 100 Stunden bei einer Temperatur von 600 bis 750° C erhitzt und danach vermahlen wird.

2. Verfahren nach Anspruch 1, bei dem das Manganoxid ein chemisch erzeugtes Produkt (CMD) oder ein β-MnO₂ (Pyrolusit) ist.

3. Verfahren nach einem der Ansprüche 1 oder 2, bei dem die Bestandteile der Mischung Mangan und Lithium in einem molaren Verhältnis Mn : Li = 2 : x mit 0,5 < x < 1,5, vorzugsweise 0,9 < x < 1,2, enthalten.

## Claims

1. Process for preparing a positive electrode for secondary lithium batteries, whereof the active material comprises a lithium manganese oxide having spinel structure, which is formed by spray-drying a suspension of manganese dioxide in an aqueous solution of lithium formate and/or lithium acetate, followed by heating the mixture, with the mixture being heated at a temperature of from 600 to 750°C for between 10 and 100 hours and then ground.

2. Process according to Claim 1, in which the manganese oxide is a chemically generated product (CMD) or a β-MnO₂ (pyrolusite).

3. Process according to one of Claims 1 or 2, in which the constituents of the mixture contain manganese and lithium in a molar ratio of Mn : Li of 2 : x, where 0.5 < x < 1.5, preferably 0.9 < x < 1.2.

## Revendications

1. Procédé de fabrication d'une électrode positive pour des batteries secondaires au lithium, dont la matière active se compose d'un oxyde de manganèse au lithium ayant une structure de spinelle qui est formée par séchage par pulvérisation d'une suspension de l'oxyde de manganèse dans une solution aqueuse de formiate de lithium et/ou d'acétate de lithium, et par chauffage consécutif du mélange, ce mélange étant chauffé entre 10 et 100 heures à une température de 600° à 750°C, puis ensuite moulu.

2. Procédé selon la revendication 1,
dans lequel
l'oxyde de manganèse est un produit obtenu chimiquement (CMD) ou un MnO₂β (pyrolusite).

3. Procédé selon l'une des revendications 1 ou 2,
dans lequel
les composants du mélange contiennent du manganèse et du lithium dans un rapport molaire Mn:Li = 2:x, avec 0,5 < x < 1,5 et de préférence 0,9 < x < 1,2.
